# EUROPEAN PATENT SPECIFICATION

(11) **EP 0 659 347 B1**
(45) Date of publication and mention of the grant of the patent: **29.08.2001**
(21) Application number: 94610054.2
(22) Date of filing: 19.12.1994
(51) Int. Cl.: A23D 9/00, A23D 7/00, C11B 5/00

(54) **Stable emulsified compositions and foods containing the same**
Stabile emulgierte Zusammensetzungen und diese enthaltende Nahrungsmittel
Compositions émulsifiées stables et aliments les contenant

(30) Priority: 20.12.1993 JP 34621793
(43) Date of publication of application: 28.06.1995
(73) Proprietor: San-Ei Gen F.F.I., Inc., Osaka (JP)
(72) Inventor: Norihiko, Inada, Ikeda-shi, Osaka (JP); Nishino, Masayuki, Nara-ken (JP)
(74) Representative: Plougmann, Vingtoft & Partners A/S

(56) References cited:
- WO-A-89/02223
- US-A- 4 963 385
- JOURNAL OF DISPERSION SCIENCE AND TECHNOLOGY, vol.15, no.5, 1994 pages 611 - 619 MAJA JAKOBSSON ET AL. 'Oxidative Stability of Fish Oil Included in a Microemulsion'
- DATABASE WPI Week 8529, Derwent Publications Ltd., London, GB; AN 85-174067 & JP-A-60 102 168 (TSUKIJIMA SHOKUHIN) 6 June 1985
- JOURNAL OF THE AMERICAN OIL CHEMISTS' SOCIETY., vol.68, no.11, 1991, CHAMPAIGN US pages 881 - 883 OCK-SOOK YI ET AL. 'Synergistic Antioxidative Effects of Tocopherol and Ascorbic Acid in Fish Oil/Lecithin/Water System'
- PATENT ABSTRACTS OF JAPAN vol. 17, no. 420 (C-1093) 5 August 1993 & JP-A-05 086 395 (MARINO FORUM 21) 6 April 1993
- DATABASE WPI Week 8722, Derwent Publications Ltd., London, GB; AN 87-154870 & JP-A-62 093 232 (TAISHO PHARMACEUT KK) 28 April 1987
- JOURNAL OF FOOD SCIENCE, vol.55, no.1, 1990, CHICAGO US pages 247 - 249 D. HAN ET AL. 'Antioxidative Effect of Ascorbic Acid Solubilized in Oils via Reversed Micelles'
- PATENT ABSTRACTS OF JAPAN vol. 10, no. 43 (C-329) 20 February 1986 & JP-A-60 192 546 (NIPPON YUSHI KK) 1 October 1985
- PATENT ABSTRACTS OF JAPAN vol. 43, no. 43 (C-329) 20 February 1986 & JP-A-60 192 547 (NIPPON YUSHI KK) 1 October 1985
- DATABASE WPI Week 9308, Derwent Publications Ltd., London, GB; AN 93-061596 & JP-A-5 009 112 (GREEN CROSS CORP) 19 January 1993
- DATABASE WPI Week 9349, Derwent Publications Ltd., London, GB; AN 93-391675 & JP-A-5 292 885 (ASAHI DENKA KOGYO KK) 9 November 1993
- JOURNAL OF THE AMERICAN OIL CHEMISTS' SOCIETY., vol.70, no.8, 1993, CHAMPAIGN US pages 773 - 778 SUSANA NIETO ET AL. 'Flavanoids as Stabilizers of Fish Oil: An Alternative to Synthetic Antioxidants'
- DATABASE WPI Week 8501, Derwent Publications Ltd., London, GB; AN 85-003969 & JP-A-59 204 696 (MITSUI PHARM INC) 20 November 1984

## Description

### BACKGROUND OF THE INVENTION

### 1. Field of the Invention

The invention relates to a stable emulsified composition which comprises at least one selected from the group consisting of docosahexaenoic acid, eicosapentaenoic acid and a derivative thereof, or a natural oil containing the above. The emulsified composition of the present invention is useful for various foods, such as beverages, frozen desserts, confectionary, dairy products, bakery products, meat and fish products and the like.

### 2. Description of the Related Arts

It has been reported that docosahexanoic acid (hereinafter referred to DHA) and eicosapentaenoic acid (hereinafter referred to EPA), which are a straight-chain polyunsaturated fatty acid and mainly contained in a fish oil, exert biological activities such as a cholesterol lowering effect in blood, anticancer effect, anti-thrombogenic effect, learning efficiency improving effect and the like, so that they are currently one of the most promising food materials.

However, since EPA has 5 double bonds in the molecule and DHA has 6 in the molecule, they are readily oxidized with a trace amount of oxygen, heat, light, oxidation catalyst and the like and occur stench of fish peculiar to the fish oil.

In use of the fish oil containing straight-chain polyunsaturated fatty acids, various techniques have been proposed to prevent oxidation or occurring of stench of fish.

As examples of the techniques, Japanese Laid-open Patent Publication Hei 4 (1992)-346749 discloses a powdered milk containing the fish oil blended with vitamin C and/or its salt; Japanese Laid-open Patent Publication Hei 2 (1990)-203741 discloses a margarine dispersing capsules which are prepared by adding tocopherol and/or a lecithin to polyunsaturated fatty acids, followed by coating with an edible coating agent; and Japanese Laid-open Patent Publication Hei 6 (1994)-49479 discloses a method for stabilizing ω -3 unsaturated fatty acids by an emulsifier such as Tween 20, sucrose fatty acid esters, sorbitan fatty acid esters, lecithins and the like.

US 4,963,385 discloses a stabilised emulsion comprising EPA and DHA, using sugar alcohols, tocopherol and a fish oil stabilising antioxidant as stabilisers and lecithin, mono-and diglycerides as an emulsifier. JP-A-60 102 168 discloses a foodstuff comprising emulsified purified fish oil containing EPA and a water soluble protein, using sugar fatty acid ester or polyglycerin fatty acid ester as emulsifiers WO 89/02223 discloses food products containing fish oil stabilised with fructose and an antioxidant.

However, sufficient effects were not obtained in any cases, and more stable emulsified composition is demanded.

The inventors of the present invention studied a method for stably dispersing DHA, EPA or the like in a hydrophilic medium and found that a specific emulsifier enables the emulsified composition to be stable when it is used with a polyalcohol or water-containing polyalcohol as a hydrophilic medium, thereby achiving the present invention.

### SUMMARY OF THE INVENTION

The present invention provides a stable emulsified composition according to claim 1. The present invention also provides a food containing the stable emulsified composition.

The emulsified composition of the present invention comprises DHA, EPA, a derivative thereof or an natural oil containing the same as an active ingredient. The active ingredient is dispersed uniformly and homogeneously in the hydrophilic medium as an oil droplet.

It is essential for the present invention to use the polyglycerin fatty acid ester having HLB of 13 or more and 14 or more carbon atoms in the fatty acid alone as the emulsifier or in combination with sucrose fatty acid ester which has 12 to 20 carbon atoms in the fatty acid, and the polyalcohol or water-containing polyalcohol as the hydrophilic medium for keeping the stability.

### PREFERRED EMBODIMENT OF THE INVENTION

Each ingredient of the present invention is described in detail as follows.

The DHA, EPA and a derivative thereof used as an active ingredient in the emulsified composition of the present invention (hereinafter referred to the active ingredient) may be a synthesized product or natural product and may be in the form of a natural oil. The term "synthesized product" means here a chemically synthesized product as well as that produced by utilizing a microorganism. The term "natural product" means here those extracted and refined from a natural oil containing DHA, EPA or a derivative thereof by a known method such as compression, extraction by solvent, steam distillation, molecular distillation, extraction by supercritical fluid, column chromatography and the like. The active ingredient of the present invention may be pure or crude.

The natural oil used for the present invention means oils derived from the natural products containing DHA, EPA or a derivative thereof. The natural oil is not specifically limited and any oils derived from the origins of algae, microorganisms, animals and plants may be used. Preferable examples of the natural oil are a fish oil (e.g., squid oil, sardine oil, krill oil, bonito oil, mackerel oil, salmon oil, saury oil, codfish oil and tuna oil), yolk oil and aglae-derived oil. More preferably, a fish oil and aglae-derived oil are used. The natural oil used for the present invention also includes those obtained by subjecting the natural oil described above to various treatments (e.g., gum removing treatment such as using an acid such as phosphoric acid, deacidification treatment using an alkali such as sodium hydroxide, bleaching with activated clay and deodrization such as steam distillation) and those concentrated by a fraction or enzyme treatment.

Preferable derivative of DHA or EPA used in the present invention at least exerts a physiological activity which DHA and EPA originally have. Any derivatives showing the activity can be included in the scope of the present invention. Examples of derivatives of DHA or EPA include its salt, amide, phospholipid, monoglyceride, diglyceride and esters (e.g., methyl ester, ethyl ester, propyl ester or sucrose ester), among which monoglyceride, diglyceride and ethyl ester are preferred.

The active ingredient is generally contained at 0.0001 to 50 wt%, preferably 0.1 to 25 wt% in the emulsified composition of the present invention. The content of the active ingredient is suitably adjusted, depending on the purpose of the usage of the emulsified composition, purity of the active ingredient, content of the active ingredient in the natural oil, concentration of the natural oil containing the active ingredient and so forth. For example, when the active ingredient is pure, it can be used at a low concentration such as about 0.0001 to 0.1 wt% in view of the high physiological activity, or at a high concentration such as about 0.1 to 50 wt% in order to expect higher physiological activity in view of the absence of impure oily components. Alternatively, when the natural oil containing the active ingredient is used as the active ingredient of the present invention, the natural oil may be concentrated upon use. If it is concentrated, the physiological activity increases, so that the emulsified composition can be prepared with a smaller amount of the natural oil. On the other hand, a content of impure oily components is reduced by concentration, so that the natural oil can be used at a high concentration.

As the emulsifier, the polyglycerin fatty acid ester having HLB of 13 or more and 14 or more carbon atoms is essentially used. The polyglycerin fatty acid ester of this type shows an especially high stability for emulsion compared with the other emulsifiers under an acidic condition, so that DHA, EPA, a derivative thereof and the natural oil containing them can be stored under an acidic condition for a long duration. Not only the polyglycerin fatty acid ester alone, but also a mixture of the polyglycerin fatty acid ester and the sucrose fatty acid ester; a mixture of the polyglycerin fatty acid ester and the lecithin; and a mixture of the polyglycerin fatty acid ester, the sucrose fatty acid ester and the lecithin may be used. The sucrose fatty acid ester and the lecithin work auxrially for stabilizing the emulsified composition. When the emulsified composition of the present invention are used in a beverage, a mixture of the polyglycerin fatty acid ester and the sucrose fatty acid ester and/or the lecithin is preferably used as an emulsifier.

When the lecithin is used as the emulsifier, it is preferably dissolved previously in an edible oil (e.g., coconut oil, γ-linolenic acid oil) because it is hardly dissolved in water. The ratio of the edible oil used for this purpose to the lecithin is about 1:1 to 1:20 by weight.

The emulsifier of the present invention is used in a sufficient amount for emulsifying at least the active ingredient in the emulsified composition. The sufficient amount means an amount with which oil droplets of a dispersed phase are uniformly and homogeneously dispersed in an hydrophilic medium. The emulsifier is generally contained in the emulsified composition at about 0.01 to 20 wt%, preferably about 0.5 to 10 wt%. The content of the emulsifier is suitably adjusted in the range described above in view of the content of the active ingredient. For a general use, the ratio of the emulsifier to the active ingredient is preferably 1:0.1 to 1:1 by weight.

Various kinds of additives such as the edible oil (a solvent of the lecithin) described above and an oil-soluble component described hereinafter may be added in the emulsified composition of the present invention. If such additives are added, the content of the emulsifier may be increased over the content defined as above, depending on the type and content of such additives. However, the range of the amount defined as above is sufficient for the general use.

In case where a mixture of the polyglycerin fatty acid ester and the sucrose fatty acid ester and/or the lecithin is used as the emulsifier of the present invention, the mixture preferably contains the polyglycerin fatty acid ester at least 50 wt%. Specifically, the mixing ratio of the polyglycerin fatty acid ester and the sucrose fatty acid ester is preferably about 1:0.05 to 1:1 by weight; the mixing ratio of the polyglycerin fatty acid ester and the lecithin is preferably about 1: 0.005 to 1:0.5 by weight; and the mixing ratio of the polyglycerin fatty acid ester and the sucrose fatty acid ester and the lecithin is preferably about 1:0.05:0.005 to 1:1:0.5 by weight.

The polyglycerin fatty acid ester used for the present invention has HLB of 13 or more, preferably 13 to 20, more preferably 13 to 16, most preferably 14 to 16, and has 14 carbon atoms or more in the fatty acid, preferably 14 to 20 carbon atoms, more preferably 14 to 18 carbon atoms. The average polymerization degree of the glycerol is 8 to 10. Preferred examples of polyglycerin fatty acid esters include hexaglyceryl monostearate, decaglyceryl monostearate, decaglyceryl monooleate, decaglyceryl monomyristate and decaglyceryl monopalmitate, among which decaglyceryl monostearate, decaglyceryl monooleate and decaglyceryl monopalmitate are more preferable. The above described polyglycerin fatty acid ester can be used for the present invention solely or in combination.

The polglycerin fatty acid ester is contained in the emulsified composition at about 0.01 to 20 wt%, preferably about 0.2 to 10 wt%. The content of the polyglycerin fatty acid ester can be suitably adjusted in the scope described above in view of the content of the active ingredient, and use amount of the sucrose fatty acid ester and the lecithin described hereinafter.

The sucrose fatty acid ester used for the present invention has HLB of 10 or more and has in the fatty acid 12 to 20 carbon atoms. Preferred examples of sucrose fatty acid esters include sucrose monostearate, sucrose monooleate and sucrose monopalmitate. The above described sucrose fatty acid ester can be used for the present invention solely or in combination.

The sucrose fatty acid ester is contained in the emulsified composition at about 0.1 to 5 wt%. The content of the sucrose fatty acid ester can be suitably adjusted in the scope described above in view of the content of the active ingredient and use amount of the polyglycerin fatty acid ester, and the lecithin described in detail hereinafter.

The lecithin used for the present invention include phospholipids such as phosphatidylcholine, phosphatidylethanolamine, phosphatidylinositol, phosphatidic acid, phosphatidylserine and sphingomyelin. Hereinafter, it is generally referred to lecithin.

The lecithin used for the present invention is those derived from any origin including animal, plant, yeast and mold. Preferred examples of the lecithins are plant lecithins (soybean lecithin, corn lecithin, rapeseed lecithin), yolk lecithins, separated lecithins and enzymatically decomposed lecithins, among which soybean lecithins, yolk lecithins and enzymatically decomposed lecithins are more preferable. The above described lecithin can be used solely or in combination.

The separated lecithin means those including a specific ingredient which is fractionated from the plant lecithin or yolk lecithin with an organic solvent such as ethanol using a difference in solubility.

The enzymatically decomposed lecithin means those obtained by reacting the plant lecithin, yolk lecithin or separated lecithin with phospholipase to hydrolyze or transfer. Various kinds of the enzymatically decomposed lecithin can be obtained, depending on the kinds of the lecithin or phospholipase, but any lecithins can be used for the present invention.

The lecithin is contained in the emulsified composition preferably at about 0.001 to 2 wt%. It can be suitably adjusted in the range described above in view of the content of the active ingredient and use amount of the polyglycerin fatty acid ester and the sucrose fatty acid ester.

The hydrophilic medium used for the present invention is a polyalcohol or water-containing polyalcohol. When the hydrophilic medium of the present invention is used, the effect on preventing stench of fish is exhibited greater than the case where only water is used as a medium. Therefore, an emulsified composition having a higher storage stability can be obtained with the hydrophilic medium. Moreover, when the hydrophilic medium of the present invention is used, an emulsified composition having an oil droplet with a smaller diameter than that of obtained by using water as a medium can be obtained. This is advantageous for applying the emulsified composition to a food such as refreshing beverage which requires the oil droplets to be small.

The water content of the water-containing polyalcohol is preferably about 50 wt% or less, more preferably about 30wt% or less. Preferred examples of polyalcohols are glycerol, sorbitol and propylene glycole, among which glycerol and solbitol are more preferable. Preferred examples of the water-containing polyalcohols include glycerol water having a concentration of about 60 wt% to 90 wt% and sorbitol water having a concentration of about 50 to 70wt%.

Preferred examples of the antioxidants used for the present invention include ascorbic acid, isoacorbic acid (erythorbic acid) or a salt thereof (for example, alkali metal salt, alkaline-earth metal salt and the like), catechins and natural extracts containing catechins. Specifically, ascorbic acids such as L-ascorbic acid, sodium L-ascorbate, erythorbic acid and sodium erythorbate; catechins such as gallocatechin, epigallocatechin, epicatechin, epigallocatechin gallate and epicatechin gallate; and natural extracts containing catechins such as tea extract, apple extract, grape seed extract, sunflower seed extract and rice bran extract are preferable, among which L-ascorbic acid, sodium L-ascorbate and tea extract are more preferable. The antioxidant described above can be used solely or in combination.

The natural extract containing catechins described above can be obtained by extracting, for example, tea leaf (e.g., green tea, oolong tea, black tea and roasted green tea), apple sarcocarp, grape seed and sunflower seed with water or an organic solvent such as ethanol and chloroform followed by purifying by means of a known method. The natural extract containing catechins used for the present invention may be pure or crude.

In addition to the antioxidant described above, a known antioxidant can be used in combination. Examples of the known antioxidants include tocopherols (e.g., extracted tocopherol or dl-α-tocopherol), polyphenols (e.g., rutin, myricetin or myricitrin), spice extracts (e.g., rosemary or sage), acids derived from a natural product (e.g., chlorogenic acid, caffeic acid, ferulic acid or gallic acid), dibutylhydroxytoluene (BHT) and butylhydroxyanisole (BHA). These antioxidant can be also used solely or in combination. The combination use of the antioxidant of the present invention with other known antioxidants is effective for preventing the stench peculiar to fish detected from the final product.

The antioxidant of the present invention is preferably used in an amount necessary for consuming oxygen present in the emulsified composition or more, generally in the range from 0.001 to 20 wt%, preferably from 0.01 to 20 wt%. The use amount of the antioxidant can be varied in the range described above, depending on the type or content of the unsaturated fatty acid as the active ingredient, purity of the active ingredient, type of the antioxidant and content of oxygen present in the emulsified composition. When a plurality of antioxidants are used in the present invention, the use amount of each antioxidant is suitably determined in the above range, depending on the type of the antioxidant and the purpose of use of the emulsified composition.

If desired, the emulsified composition of the present invention may comprise other additives in order to improve readiness of emulsification, heat resistance, resistance to acid, storage stability, stability of emulsification in the foods and the like. Any known additives including oil-soluble and water-soluble ones can be used, as far as it does not facilitate oxidation of DHA, EPA or the derivative thereof. Examples of the additives are polysaccharides (e.g., soluble starch, dextrin, cyclodextrin, Arabic gum, pectin and xanthan gum), preservatives (e.g., paraoxybenzoic acid esters or benzoic acid), specific gravity adjusting agents (sucrose acetate isobutylate (SAIB)), protein decomposed products (e.g., casein or gelatin), vitamins, colorants (e.g., α-carotene, β-carotene or lycopene), flavors and unsaturated fatty acids (e.g., α-linolenic acid, γ-linolenic acid or linoleic acid). The use amount of the additives can be suitably adjusted in accordance with the purpose of use of the emulsified composition.

The oil droplet in the emulsified composition of the present invention may possess a diameter of 0.2 µm or less in accordance with the purpose of use of the emulsified composition. When the emulsified composition is used in aqueous foods such as beverages, muddiness, neckling and precipitation are prevented from generating in the aqueous foods, if the diameter is controlled to be in the above range. The term "neckling" described above generally refers to the droplets rised to the surface of a beverage and aggregated because of the difference of a specific gravity of the oil droplets which are included in the emulsified composition. As the results, stable food products can be obtained without adjusting the specific gravity. Further, since the specific gravity adjusting agent is not used, the emulsified composition can be produced without heating in any steps of the manufacturing process.

The emulsified composition of the present invention can be produced as follows. For example, water-soluble ingredients and oil-soluble ingredients are separately dissolved in each medium to prepare the respective mixtures. Then, the mixture of oil-soluble ingredients is added to the mixture of water-soluble ingredients to disperse oil-soluble uniformly and homogeneously. A device for emulsification such as colloid mill, homomixer and high pressure homogenizer is preferably used for preparing the emulsified composition. In addition, it is desirable to control heat which is generated in the process of emulsification by using a cooling device.

Thus obtained emulsified composition is stable on oxidation, does not occur stench, and is available for long term storage, so that it is preferably used for various foods such as beverages, frozen desserts, confectionary, dairy products; bakery products, meat and fish products and the like.

The food containing the emulsified composition of the present invention includes DHA, EPA or a derivative thereof without damaging characteristics such as shape, smell, taste, crispy taste, color and the like which the food originally has, and does not generate neckling or precipitation.

The emulsified composition of the present invention can be added to various foods as a food additive. The food to which the emulsified composition of the present invention is added may be in the form of liquid, semi-solid or solid. Specific examples of the food are as follows.

Beverages: carbonated drink, fruit juice, dairy drink, vegetable juice, soybean milk and the like.

Frozen desserts: ice cream, ice candy, sherbet and the like.

Confectionaries: jelly, candy, gum, cookie, cake, chocolate, pie, biscuit, pudding and the like.

Dairy products: milk, yogurt, cheese, butter, margarine, mayonnaise, salad dressing and the like.

Bakery products: breads, noodles, pastas and the like.

Meat and fish products: ham, sausage, boiled fish paste, tubular roll of boiled fish paste and the like.

Seasonings: fermented soybean paste (miso), source and the like.

Cooked foods: omelet, curry, stew, hamburg, croquette, soup, meat and vegetable pancake (okonomiyaki), fried dumpling stuffed with minced pork and the like.

Others: animal feed, medicine, quasi drug and the like.

The emulsified composition is added generally to the food described above such that DHA, EPA, the derivative thereof or the natural oil containing them, which are the active ingredient, is included in the food at about 0.0001 to 1 wt%, preferably at about 0.001 to 0.1 wt%.

The emulsified composition of the present invention can be applied to various foods by a known method.

The present invention is described in detail with reference to the Examples. However, it is not intended to limit the scope of the present invention. In the following Examples, the symbol "%" refers to wt%, as far as it is not specifically mentioned as such.

### EXAMPLES

### Example 1: Effect of the Types of Polyglycerin Fatty Acid Ester

An emulsified composition was prepared by using a polyglycerin fatty acid ester shown in Table 1 as an emulsifier, an active ingredient, an antioxidant and a hydrophilic medium as listed below, and a stability test was conducted.

### (Preparation for the emulsified composition)

| Active ingredient | Content (%) |
|---|---|
| Refined fish oil | 20 |
| (Containing about 25% of DHA and about 10% of EPA) | |

| Emulsifier | |
|---|---|
| Polyglycerin fatty acid ester (see Table 1) | 5 |

| Antioxidant | |
|---|---|
| L-ascorbic acid | 0.5 |

| Hydrophilic medium | |
|---|---|
| Water | 24.5 |
| Glycerol | 50 |
| Total | 100 |

### (A method for preparing the emulsified composition and for testing stability thereof)

Glycerol, polyglycerin fatty acid ester and L-ascorbic acid were added to water, followed by adding refined fish oil. After stirring, the mixture was emulsified by using a homogenizer, thereby giving an emulsified composition.

The obtained emulsified composition was allowed to stand at room temperature for one week, and then the state of the emulsified composition was observed. The results are shown in Table 1, in which o indicates that the emulsified composition was stable and x indicates that it was separated into two layers.

**Table 1**

| Polyglycerin fatty acid ester | Average polymerization of glycerin | Fatty acid | HLB | State of emulsified composition after 1 wk storage | |
|---|---|---|---|---|---|
| | | | | room temp. | 60°C |
| Tetraglyceryl monostearate | 4 | 18:0 | 10 | X | X |
| | | | | | |
| Hexaglyceryl monostearate | 6 | 18:0 | 12 | o | X |
| | | | | | |
| Decaglyceryl monosearate | 10 | 18:0 | 14 | o | o |
| | | | | | |
| Decaglyceryl tristearate | 10 | 18:0 | 9 | X | X |
| | | | | | |
| Octaglyceryl monooleate | 8 | 18:1 | 13 | o | o |
| | | | | | |
| Decaglyceryl monooleate | 10 | 18:1 | 14 | o | o |
| | | | | | |
| Decaglyceryl monomyristate | 10 | 14:0 | 15 | o | o |
| | | | | | |
| Decaglyceryl monolaurate | 10 | 12:0 | 16 | o | X |
| | | | | | |
| Decaglyceryl monocaprylate | 10 | 8:0 | 16 | X | X |

As seen from Table 1, it is clear that polyglycerin fatty acid esters having HLB of 13 or more, an average polymerization degree of glycerin of 8 or more and 14 carbon atoms or more in the fatty acid exhibits an excellent effect.

### Example 2: Effect of Added Amount of Polyglycerin Fatty Acid Ester

An emulsified composition was prepared by using an active ingredient, emulsifier, antioxidant and hydrophilic medium listed below, varying the content of the active ingredient and emulsifier as shown in Table 2. The stability of the emulsified composition was tested.

### (Preparation for the emulsified composition)

| Active ingredient | Content (%) |
|---|---|
| Refined fish oil | see Table 2 |
| (Containing about 25% of DHA and about 10% of EPA) | |

| Emulsifier | |
|---|---|
| Decaglyceryl monooleate | see Table 2 |

| Antioxidant | |
|---|---|
| L-ascorbic acid | 0.5 |

| Hydrophilic medium | |
|---|---|
| Glycerol | 40 |
| Water | Remainder |
| Total | 100 |

### (A method for preparing the emulsified composition and for testing stability thereof)

Glycerol, decaglyceryl monooleate and L-ascorbic acid were dissolved in water, followed by adding refined fish oil. After stirring, the mixture was emulsified by using a homogenizer, thereby giving an emulsified composition.

The obtained emulsified composition was allowed to stand at room temperature for 1 week. Then, the state of the emulsified composition was observed. The results are shown in Table 2, in which o indicates that the emulsified composition was stable and x indicates that it was separated into two layers.

**Table 2**

| Refined fish oil (%) | Decaglyceryl Monooleate | State |
|---|---|---|
| 1 | 0.1 | O |
| 10 | 0.1 | X |
| 40 | 0.1 | X |
| 1 | 2 | O |
| 10 | 2 | O |
| 40 | 2 | O |
| 1 | 10 | O |
| 10 | 10 | O |
| 40 | 10 | O |

As seen from Table 2, in case where the refined fish oil (containing about 25% of DHA and about 10% of EPA) is used as an active ingredient, it is clear that an excellent effect is exhibited when the polyglycerin fatty acid ester is added at such amount that active ingredient : polyglycerin fatty acid ester is 1: 0.05 (40:2) or more.

### Example 3: Effect of Water-content of Hydrophilic Medium

An emulsified composition was prepared by using the following hydrophilic medium (glycerol water) or water, an active ingredient, emulsifier, antioxidant. The stability of the emulsified composition was tested.

### (Preparation for the emulsified composition)

| Active ingredient | Content (%) | | | |
|---|---|---|---|---|
| Refined fish oil | 20 | 20 | 20 | 20 |
| (Containing about 25% of DHA and about 10% of EPA) | | | | |

| Emulsifier | | | | |
|---|---|---|---|---|
| Decaglyceryl monooleate | 5 | 5 | 5 | 5 |

| Antioxidant | | | | |
|---|---|---|---|---|
| Ascorbic acid | 1 | 1 | 1 | 1 |

| Hydrophilic medium | | | | |
|---|---|---|---|---|
| Glycerol | - | 30 | 52 | 74 |
| Water | 74 | 44 | 22 | - |
| Total | 100 | 100 | 100 | 100 |
| Water content of hydrophilic medium (%) | 100 | 60 | 30 | 0 |

### (A method for preparing the emulsified composition and for testing stability thereof)

Decaglyceryl monooleate and ascorbic acid were dissolved in hydrophilic medium, followed by adding refined fish oil. After stirring, the mixture was emulsified by using a homogenizer, thereby giving an emulsified composition.

The emulsified composition was diluted 1000 times with ion exchanged water. Then, the flavor was tested and the diameter of oil droplets contained in the emulsified composition was measured by a laser diffraction type granulometer SALD-110, manufactured by SHIMAZU Corporation of Japan.

Separately, the obtained emulsified composition was stored at 40°C for 2 weeks and diluted 1000 times with ion exchanged water. Then, the flavor was tested and the diameter of oil droplets contained in the emulsified composition was measured by a laser diffraction type granulometer SALD-110.

The results are shown in Table 3. Symbols in Table 3 indicate an evaluation in accordance with the following flavor evaluation standards.

Flavor Evaluation Standard
- - :: stench of fish was not sensed.
- + :: stench of fish was slightly sensed.
- ++ :: stench of fish was sensed.
- +++ :: stench of fish was strongly sensed.

**Table 3**

| Water content of hydrophilic medium | No storage | | Stored at 42°C for 2 wks | |
|---|---|---|---|---|
| | Flavor Evaluation | Oil droplet diameter (µm) | Flavor Evaluation | Oil droplet diameter (µm) |
| 100 | ++ | 0.86 | +++ | 1.1 |
| 60 | + | 0.52 | ++ | 0.70 |
| 30 | - | 0.24 | - | 0.25 |
| 0 | - | 0.23 | - | 0.23 |

As seen from Table 3, it is clear that the emulsified composition prepared by using a hydrophilic medium having a water content of about 30% or less prevents the stench of fish from generating and exhibits a storage stability better than the case where water alone or hydrophilic medium having a high water content is used for preparing the emulsified composition. Further, the lower the water content of the hydrophilic medium, the smaller the oil droplet in the emulsified composition.

### Example 4: Effect of Type of Antioxidant

An emulsified composition was prepared by using an antioxidant shown in Table 4 with an active ingredient, emulsifier and hydrophilic medium described below. The stability of the emulsified composition was tested.

### (Preparation for the emulsified composition)

| Active ingredient | Content (%) |
|---|---|
| Refined fish oil | 20 |
| (Containing about 25% of DHA and about 10% of EPA) | |

| Emulsifier | |
|---|---|
| Decaglyceryl monostearate | 5 |

| Antioxidant | |
|---|---|
| See Table 4 | 1 |

| Hydrophilic medium | |
|---|---|
| Water | 24 |
| Glycerol | 50 |
| Total | 100 |

### (A method for preparing the emulsified composition and for testing stability thereof)

Glycerol, decaglyceryl monostearate and an antioxidant were dissolved in water, followed by adding refined fish oil. After stirring, the mixture was emulsified by using a homogenizer, thereby giving an emulsified composition. Among the antioxidants in Table 4, extracted tocopherol and L-ascorbate palmitate were directly dissolved in the refined fish oil to prepare the emulsified composition.

The obtained emulsified composition was stored at 40°C for 1 week, and diluted 1000 times with ion exchanged water. Then, the flavor of the emulsified composition was tested. The results are shown in Table 4. Symbols in Table 4 indicate an evaluation in accordance with the following flavor evaluation standards of Example 3.

**Table 4**

| Antioxidant | Evaluation on flavor |
|---|---|
| Blank | +++ |
| L-ascorbic acid | - |
| Sodium L-ascorbate | - |
| Erythorbic acid | - |
| Tea extract | - |
| Apple extract | - |
| Grape seed extract | - |
| Sunflower seed extract | - |
| Gallic acid | + |
| Extracted tocopherol | ++ |
| L-ascorbate palmitate | ++ |

As seen from Table 4, it is clear that an excellent antioxidant activity is exhibited when L-ascrobic acid, sodium L-ascorbate, erythorbic acid, tea extract, apple extract, grape seed extract and sunflower seed extract was used.

### Example 5: Effect of Added Amount of Antioxidant

An emulsified composition was prepared by using an active ingredient, emulsifier, antioxidant and hydrophilic medium listed below, varying the content of the antioxidant as shown in Table 5. The stability of the emulsified composition was tested.

### (Preparation for the emulsified composition)

| Active ingredient | Content (%) |
|---|---|
| Refined fish oil | 20 |
| (Containing about 25% of DHA and about 10% of EPA) | |

| Emulsifier | |
|---|---|
| Decaglyceryl monostearate | 5 |

| Antioxidant | |
|---|---|
| L-ascorbic acid | see Table 4 |
| Tea extract | see Table 4 |

| Hydrophilic medium | |
|---|---|
| Glycerol | 50 |
| Water | Remainder |
| Total | 100 |

### (A method for preparing the emulsified composition and for testing stability thereof)

Glycerol, decaglyceryl monostearate and antioxidant (L-ascorbic acid or tea extract) were dissolved in water, followed by adding refined fish oil. After stirring, the mixture was emulsified by using a homogenizer, thereby giving an emulsified composition.

The obtained emulsified composition was allowed to stand at 40°C for 1 week and diluted 1000 times with ion exchanged water. Then, the flavor of the emulsified composition was tested. The results are shown in Table 5. Symbols in Table 5 indicate an evaluation in accordance with the above described flavor evaluation standards.

**Table 5**

| L-ascorbic acid | Tea extract | Evaluation on flavor |
|---|---|---|
| - | - | +++ |
| 0.001 | - | ++ |
| 0.1 | - | + |
| 1 | - | - |
| 5 | - | - |
| - | 1 | + |
| - | 20 | - |

As seen from Table 5, in case where refined fish oil (containing about 25% of DHA and about 10% of EPA) is used as an active ingredient, antioxidant effect is exhibited with 0.001% L-ascorbic acid or more and with 1% tea extract or more.

It is considered that the antioxidant effect is exhibited when the antioxidant is contained in a sufficient amount to consume oxygen present in the emulsified composition.

### Example 6: Effect of Type of Emulsifier

An emulsified composition was prepared by using a mixture of decaglyceryl monostearate and an emulsifier shown in Table 6 as an emulsifier, with an active ingredient, antioxidant and hydrophilic medium described below. The stability of the emulsified composition in a carbonated drink was tested.

### (Preparation for the emulsified composition)

| Active ingredient | Content (%) |
|---|---|
| Refined fish oil | 20 |
| (Containing about 25% of DHA and about 10% of EPA) | |

| Emulsifier | |
|---|---|
| Decaglyceryl monostearate | 5 |
| Other Emulsifier (see Table 6 | 0.5 |

| Antioxidant | |
|---|---|
| L-ascorbic acid | 0.5 |

| Hydrophilic medium | |
|---|---|
| Water | 24 |
| Glycerol | 50 |
| Total | 100 |

### (A method for preparing the emulsified composition and a carbonated drink, and a method for testing stability thereof)

Glycerol, polyglycerin fatty acid ester, an emulsifier shown in Table 6 and L-ascorbic acid were dissolved in water, followed by adding refined fish oil. After stirring, the mixture was emulsified by using a homogenizer, thereby giving an emulsified composition.

A syrup for carbonated drink having the following composition was prepared with the obtained emulsified composition. To 50 g of the syrup was added a carbonated water to prepare 200 ml of a carbonated drink. The carbonated drink was allowed to stand at room temperature for 1 month and the state of the carbonated drink (presence or absence of neckling) was observed. The results are shown in Table 6. Symbols in Table 6 indicate an evaluation in accordance with the following flavor evaluation standards.

Evaluation Standard
- - :: neckling was not generated.
- + :: neckling was slightly generated.
- ++ :: neckling was generated.
- +++ :: neckling was greatly generated.

### (Preparation of syrup for carbonated drink)

| | |
|---|---|
| Liquid sugar of fructose and glucose (Brix 75°) | 26 g |
| Citric acid | 0.4 g |
| L-ascorbic acid | 0.1 g |
| Emulsified composition | 0.2 g |
| Ion exchanged water | 23.3 g |
| Total | 50 g |

**Table 6**

| Other emulsifier | Generation of neckling |
|---|---|
| Additive-free | + |
| Glyceryl monooleate | ++ |
| Sucrose monooleate | - |
| Sorbitan monooleate | + |
| Soybean lecithin | - |
| Enzymatically decomposed lecithin | - |

As seen from Table 6, when the emulsified composition is used for carbonated drink, an excellent effect is exhibited by using a mixture of decaglyceryl monostearate and sucrose monooleate or a mixture of decaglyceryl monostearate and the lecithin as an emulsifier compared with the case where decaglyceryl monostearate alone, a mixture of decaglyceryl monostearate and glyceryl monooleate or a mixture of decaglyceryl monostearate and sorbitan monooleate is used as an emulsifier.

### Example 7: Effect of Presence or Absence of Antioxidant

An emulsified composition A comprising an active ingredient, emulsifier, antioxidant and hydrophilic medium described below was prepared, and an emulsified composition B was prepared in the same manner except that the antioxidant is not contained. Yogurt was prepared with the emulsified composition A or B and the stability of the yogurt was tested.

### (Preparation for the emulsified composition)

| | Content (%) | |
|---|---|---|
| Active ingredient | A | B |
| Refined fish oil | 20 | 20 |
| (Containing about 25% of DHA and about 10% of EPA) | | |

| Emulsifier | | |
|---|---|---|
| Decaglyceryl monooleate | 2 | 2 |
| Sucrose monostearate | 1 | 1 |

| Antioxidant | | |
|---|---|---|
| Tea extract | None | 3 |

| Hydrophilic medium | | |
|---|---|---|
| Water | 37 | 34 |
| Glycerol | 40 | 40 |
| Total | 100 | 100 |

### (A method for preparing the emulsified composition and yogurt, and a method for testing stability thereof)

Glycerol, an emulsifier and antioxidant (antioxidant is added only for preparing the emulsified composition B) were dissolved in water, followed by adding refined fish oil. After stirring, the mixture was emulsified by using a homogenizer, thereby giving emulsified compositions A and B.

Yogurt having the following composition was prepared with the obtained emulsified composition A or B. The obtained yogurt was sterilized and cooled. Then 1% cultivated product of lactic acid bacterium was added thereto. The resulting was place in a polyethylene-made transparent cup and cultivated at 28°C for 20 hours. Subsequently, it was irradiated with fluorescent light (2000 lux, for 1 week) and flavor was evaluated. The results are shown in Table 7. The average values in Table 7 indicate an evaluation in accordance with the following evaluation standards.

### (Preparation of Yogurt)

| | |
|---|---|
| Milk | 50% |
| Powdered skim milk | 5% |
| Emulsified composition | 1% |
| Ion exchanged water | 44% |
| Total | 100% |

Evaluation Standard:
- 5 :: stench of fish was not sensed.
- 4 :: stench of fish was slightly sensed.
- 3 :: stench of fish was sensed.
- 2 :: stench of fish was strongly sensed.
- 1 :: stench of fish was sensed extremely
strongly.

**Table 7**

| Emulsified composition | Average value |
|---|---|
| A | 3.2 |
| B | 4.3 |

As seen from Table 7, the emulsified composition comprising an emulsifier and antioxidant exhibits a more excellent effect compared with the emulsified composition comprising only emulsifier (without containing antioxidant).

### Example 8: Effect of Diameter of Oil Droplet

To a solution in which 4 g of polyglycerin fatty acid ester and 0.5 g of sodium L-ascorbate were dissolved in a mixture of 45 g of glycerol and 20 g of water, was added an oily mixture solution of 20 g of fish oil, 8 g of refined coconut oil and 0.5 g of soybean lecithin. After stirring, the mixture was emulsified by using a homogenizer under high pressure, thereby giving a homogeneous emulsified composition in which oil droplets have an average diameter of about 0.20 µm (Product 1 of the present invention). The diameter of the oil droplet was measured by a laser diffraction type granulometer SALD-110.

An emulsified composition in which oil droplets have an average diameter of about 0.7 µm was obtained in the same manner as a method for producing Product 1 of the present invention except for reducing a pressure of a high pressure homogenizer for forming oil droplets with an average diameter of about 0.7 µm (Comparative Product 1).
(1) The obtained Product 1 was stored at 60°C for 1 week and then diluted 1000 times with ion exchanged water. Ten panellers attended to a sensory test of the flavor of the diluted solution. The results are shown in Table 8. The average value in Table 8 was given in accordance with the following evaluation standard.
Evaluation Standard:
- 5 :: stench was not sensed.
- 4 :: stench was rarely sensed.
- 3 :: stench of fish was slightly sensed.
- 2 :: stench of fish was sensed.
- 1 :: stench of fish was strongly sensed.

**Table 8**

| Sample | Average value of sensory evaluation | |
|---|---|---|
| | Before storage | After storage |
| Product 1 | 4.4 | 4.3 |

As is clearly seen from Table 8, stench of fish derived from DHA is not sensed from Product 1 after storage at 60°C for 1 week.
(2) Liquid sugar of fructose and glucose (160 g) and citric acid (0.5 g) were dissolved in 90 g of water, and 1 g of Product 1 or Comparative Product 1 was added thereto. To the mixture, was added carbonated water to prepare 1 liter of carbonated drink. The carbonated drink was poured in a bottle, sealed and sterilized at 85°C for 20 minutes. It was stored at 60°C for 10 days and observed. The results are shown in Table 9. Symbols in the Table 9 indicate the following meanings.
- -R :: Neckling was not observed.
- ±R :: Neckling was slightly observed.
- +R :: Clear neckling was observed.
- ++R :: Significant neckling was observed.

**Table 9**

| Sample | Stored at 60°C for 10 days |
|---|---|
| | Neckling |
| Product 1 | -R |
| Comparative product 1 | +R |

As is clearly seen from Table 9, neckling is not observed in a drink comprising Product 1, while it is observed in a drink comprising Comparative Product 1. Accordingly, it is understood that a stable carbonated drink is obtained by using the emulsified composition containing oil droplets with smaller average diameter.

### Example 9: Stability on Lactic Fermentinq Beveraqe Containinq the Emulsified Composition

An emulsified composition was prepared by using an active ingredient, emulsifier, antioxidant and hydrophilic medium. A lactic fermenting beverage was prepared with the emulsified composition, and stability of the beverage was tested.

### (Preparation of the emulsified composition)

| Active ingredient | Content (%) |
|---|---|
| Refined fish oil | 50 |
| (Containing about 50% of DHA and about 15% of EPA) | |

| Emulsifier | |
|---|---|
| Decaglyceryl monooleate | 7 |
| Sucrose monostearate | 3 |
| Enzymatically decomposed lecithin | 0.5 |

| Antioxidant | |
|---|---|
| Sodium L-ascorbate | 1 |

| Hydrophilic medium | |
|---|---|
| Glycerol | 30 |
| Water | 8.5 |
| Total | 100 |

### (A method for preparing the emulsified composition and lactic fermenting beverages A and B, and a method for testing stability thereof)

The antioxidant and emulsifier were dissolved in hydrophilic medium, followed by adding the active ingredient. After stirring, the mixture was emulsified by using a homogenizer, thereby giving an emulsified composition.

Lactic fermenting beverage having the following composition was prepared with the emulsified composition.

### (Preparation for lactic fermenting beverage)

| | Content (Kg) | |
|---|---|---|
| Ingredient (1) | A | B |
| Powdered skim milk | 1 | 1 |
| Cultivated Product of lactic fermenting bacterium | 1 | 1 |
| Ion exchanged water | 20 | 20 |

| Ingredient (2) | | |
|---|---|---|
| Sugar | 8 | 8 |
| Powdered skim milk | 2 | 2 |
| Pectin | 0.4 | 0.4 |
| Citric acid | 0.1 | 0.1 |
| Emulsified composition | 1 | None |
| Refined fish oil (Containing about 50% of DHA and 15% of EPA) | None | 0.5 |
| Flavor (Yogurt flavor) | 0.1 | 0.1 |
| Water | 66.4 | 66.9 |
| Total | 100 | 100 |

A fermentated milk was prepared by using the ingredient (1) described above by a known method. After sterilizing and cooling, the fermentated milk was added to a mixture of ingredient (2) and homogenized by homogenizer, thereby preparing a lactic fermenting beverage.

Thus obtained lactic fermenting beverage was stored in a refrigerator for 2 weeks and then the flavor was evaluated by 10 panellers. The results are shown in Table 10. The average values in Table 10 indicate the evaluation in accordance with the flavor evaluation standard described in Example 7.

**Table 10**

| Lactic fermenting beverage | Average value |
|---|---|
| A | 4.6 |
| B | 3.8 |

As is seen from Table 10, a lactic fermenting beverage containing refined fish oil can control the generation of stench of fish when it contains the emulsified composition of the present invention.

### Example 10: Stability of Pudding containing Emulsified Composition

An emulsified composition was prepared by using the following active ingredient, emulsifier, antioxidant and hydrophilic medium. A pudding was prepared with the emulsified composition and stability of the pudding was tested.

### (Preparation for the emulsified composition)

| Active ingredient | Content (%) |
|---|---|
| Refined fish oil | 5 |
| (Containing about 5% of DHA and about 0.1% of EPA) | |

| Emulsifier | |
|---|---|
| Decaglyceryl monostearate | 3 |
| Sucrose monooleate | 1 |

| Antioxidant | |
|---|---|
| Sunflower seed extract | 5 |

| Hydrophilic medium | |
|---|---|
| Glycerol | 50 |
| Water | 36 |
| Total | 100 |

### (A method for preparing the emulsified composition and pudding, and a method for testing stability thereof)

In the same manner as Example 9, an emulsified composition was prepared. A pudding having the following composition was prepared with the emulsified composition.

| (Preparation of pudding) | Content (Kg) |
|---|---|
| Whole sweetened condensed milk | 6 |
| Powdered skim milk | 5 |
| Refined coconut oil | 4 |
| Sugar | 9 |
| Sweetened yolk | 8 |
| Gelling agent | 0.5 |
| Flavor | 0.2 |
| Emulsified composition | 0.5 |
| Water | 66.8 |
| Total | 100 |

After dissolving the ingredients listed above, the mixture was sterilized at 85°C for 10 minutes and homogenized by a homogenizer. A bottle was filled with the resulting and cooled, thereby preparing a pudding.

Thus prepared pudding was stored at 7°C for 2 weeks and the flavor was evaluated. As the results, no change was shown in the flavor.

### Example 11: Stability of Vienna Sausage Containing the Emulsified Composition

An emulsified composition was prepared by using the following active ingredient, emulsifier, antioxidant and hydrophilic medium. A Vienna sausage was prepared with the emulsified composition and stability of the Vienna sausage was tested.

### (Preparation for the emulsified composition)

| Active ingredient | Content (%) |
|---|---|
| Refined fish oil | 10 |
| (Containing about 35% of DHA and about 10% fo EPA) | |

| Emulsifier | |
|---|---|
| Decaglyceryl monostearate | 2 |
| Decaglyceryl monooleate | 3 |

| Antioxidant | |
|---|---|
| Erythorbic acid | 0.5 |

| Hydrophilic medium | |
|---|---|
| D-sorbitol | 60 |
| Water | 24.5 |
| Total | 100 |

### (A method for preparing the emulsified composition and Vienna sausage, and a method for testing stability thereof)

In the same manner as Example 9, an emulsified composition was prepared. A Vinna sausage having the following composition was prepared with the emulsified composition.

### (Preparation for a Vienna sausage)

| (Ingredient A) | Content (Kg) |
|---|---|
| Pork meet | 7 |
| Lard | 1 |
| Iced water | 2 |
| | 10 |

| (Ingredient B) | |
|---|---|
| Table salt | 150 |
| Sodium Nitrite | 5 |
| Sodium polyphosphate | 50 |
| Spice mix | 50 |
| Sodium L-glutamate | 10 |
| Sugar | 20 |
| Potassium sorbate | 20 |
| Starch | 300 |
| Emulsified composition | 200 |
| Total | 805 |

A dough was prepared with above listed ingredient A and ingredient B by a known method. Then, a bowel of mutton was filled with the dough, dried, smocked, sterilized and cooled, thereby giving a Vienna sausage.

After storing the Vienna sausage for 2 weeks in a refrigerator and tasted. As the results, the flavor was good and stench of fish was not sensed.

### Example 12: Stability of Refreshing Beverage Containing the Emulsified Composition

An emulsified composition was prepared by using the following active ingredient, emulsifier, antioxidant and hydrophilic medium and the other oil-soluble ingredients. A refreshing beverage was prepared with the emulsified composition and stability of the refreshing beverage was tested.

### (Preparation for the emulsified composition)

| Active ingredient | Content (%) |
|---|---|
| Refined fish oil | 5 |
| (Containing about 35% of DHA and about 10% of EPA) | |

| Other oil-soluble ingredient | |
|---|---|
| β-Carotene | 0.5 |
| Middle chain triglyceride | 5 |
| Orange oil | 0.5 |
| SAIB (Sucrose acetate isobutylate) | 10 |

| Emulsifier | |
|---|---|
| Decaglyceryl monooleate | 6 |
| Enzymatically decomposed lecithin | 0.1 |

| Antioxidant | |
|---|---|
| L-ascorbic acid | 0.5 |

| Hydrophilic medium | |
|---|---|
| Glycerol | 50 |
| Water | 22.4 |
| Total | 100 |

### (A method for preparing the emulsified composition and refreshing beverage, and a method for testing stability thereof)

The active ingredient was dissolved in other oil-soluble ingredients by heating and the mixture was added to the hydrophilic medium in which the antioxidant and emulsifier were dissolved. After stirring, the mixture was emulsified by using a homogenizer, thereby giving an emulsified composition. A refreshing beverage having the following composition was prepared with the emulsified composition.

### (Preparation for refreshing beverage)

| | Content (Kg) |
|---|---|
| Liquid sugar of fructose and glucose | 15 |
| Transparent orange juice (1/5 condensed) | 0.2 |
| L-ascorbic acid | 0.1 |
| Citric acid (crystalline) | 0.2 |
| Sodium citrate | 0.05 |
| Orange flavor | 0.1 |
| Emulsified composition | 0.2 |
| Water | 84.15 |
| Total | 100 |

A refreshing beverage was prepared by mixing and dissolving the above ingredients and sterilized and cooled.

Thus obtained refreshing beverage was stored at room temperature for 3 months and then the flavor was evaluated. As the result, stench of fish was not sensed.

In addition, oily component of the refreshing beverage before and after the storage was extracted with n-hexane and POV (Peroxide Value) of the oily component was measured. The results are shown in Table 11. In Table 11, the unit of POV is meq/Kg.

**Table 11**

| | POV |
|---|---|
| Before Storage | 0.9 |
| After Storage | 1.1 |

As is clearly seen from Table 11, POV was hardly raised after 3 months storage at room temperature.

### Example 13: Stability of Hard Candy Containing the Emulsified Composition

An emulsified composition was prepared by using the following active ingredient, emulsifier, antioxidant and hydrophilic medium and the other oil-soluble ingredients. A hard candy was prepared with the emulsified composition and stability of the hard candy was tested.

### (Preparation for the emulsified composition)

| Active ingredient | Content (%) |
|---|---|
| Refined fish oil | 10 |
| (Containing about 25% of DHA and 10% of EPA) | |

| Other oil-soluble ingredient | |
|---|---|
| γ-Linolenic acid oil (7-Linolenic acid: 25%) | 10 |

| Emulsifier | |
|---|---|
| Decaglyceryl palmitate | 6 |
| Soybean lecithin | 0.5 |

| Antioxidant | |
|---|---|
| Apple extract | 1 |
| Extracted tocopherol | 0.5 |

| Hydrophilic medium | |
|---|---|
| Glycerol | 72 |
| Total | 100 |

### (A method for preparing the emulsified composition and hard candy, and a method for testing stability thereof)

The active ingredient was dissolved in other oil-soluble ingredients and the mixture was added to the hydrophilic medium in which the antioxidant and emulsifier were dissolved. After stirring, the mixture was emulsified by using a homogenizer, thereby giving an emulsified composition.

A hard candy having the following composition was prepared with the emulsified composition.

### (Preparation for hard candy)

| | Content (Kg) |
|---|---|
| Sugar | 60 |
| Starch syrup | 40 |
| Citric acid (crystal) | 0.7 |
| L-ascorbic acid | 0.05 |
| Colorant | 0.05 |
| Flavor | 0.3 |
| Emulsified composition | 0.4 |
| Water | 20 |
| Total | 100 |

The hard candy was prepared with the above ingredients by a known method.

Thus obtained hard candy was stored at room temperature for 3 months, then the flavor was evaluated. As the results, stench of fish was not sensed.

The emulsified composition of the present invention is a stable emulsified composition comprising at least one selected from the group consisting of DHA, EPA and a derivative thereof, or a natural oil containing the above as an active ingredient. In particular, the stable emulsified composition of the present invention is stable on oxidation, does not generate stench and can be preferably used for various foods such as beverage, frozen desserts, confectionary, dairy products, bakery products, meat and fish products and the like.

According to the emulsified composition of the present invention, a stable food can be provided which comprises DHA, EPA or a derivative thereof without damaging characteristics such as shape, smell, taste, crispy taste, color and the like which a food originally has. In addition, the emulsified composition of the present invention is available for preventing neckling or precipitation when it is added in an aqueous food with any specific gravity.

## Claims

1. A stable emulsified composition which comprises an active ingredient which is at least one selected from the group consisting of docosahexaenoic acid, eicosapentaenoic acid and a derivative thereof, or a natural oil containing the above; an emulsifier in an amount sufficient to emulsify at least the active ingredient; an antioxidant selected from L-ascorbic acid, sodium L-ascorbate, erythorbic acid, tea extract, apple extract, grape seed extract, sunflower seed extract and any combination hereof; and a hydrophilic medium having a water content of 30% or less; in which the emulsifier is a polyglycerin fatty acid ester having HLB of 13 or more, 14 carbon atoms or more in the fatty acid and an average polymerization degree of glycerin of 8-10 alone or a combination of the polyglycerin fatty acid ester and a sucrose fatty acid ester having 12 to 20 carbon atoms in the fatty acid and/or a lecithin, the mixing ratio of the emulsifier and the active ingredient is about 1:0.1 to 1:1 by weight, and the hydrophilic medium is a polyalcohol or a water-containing polyalcohol, the composition comprising oil droplets of an average diameter of 0.2 µm or less.

2. An emulsified composition according to claim 1, in which the active ingredient is the natural oil containing docosahexaenoic acid, eicosapentaenoic acid or a derivative thereof.

3. An emulsified composition according to claim 1, in which the natural oil is derived from fish, yolk or algae.

4. An emulsified composition according to claim 1, in which the active ingredient which is at least one selected from the group consisting of docosahexaenoic acid, eicosapentaenoic acid and the derivative thereof, or the natural oil containing the above is contained at about 0.0001 to 50 wt% in the emulsified composition.

5. An emulsified composition according to claim 1, in which the polyglycerin fatty acid ester is decaglyceryl monostearate, decaglyceryl monooleate or decaglyceryl monopalmitate.

6. An emulsified composition according to claim 1, in which the mixing ratio of the polyglycerin fatty acid ester and the sucrose fatty acid ester is about 1:0.05 to 1:1 by weight.

7. An emulsified composition according to claim 1, in which the mixing ratio of the polyglyceryl fatty acid ester and the lecithin is about 1:0.005 to 1:0.5 by weight.

8. An emulsified composition according to claim 1, in which the mixing ratio of the polyglyceryl fatty acid ester, the sucrose fatty acid ester and the lecithin is about 1:0.05:0.005 to 1:1:0.5 by weight.

9. An emulsified composition according to claim 1, in which the emulsifier is contained at about 0.01 to 20 wt% in the emulsified composition.

10. An emulsified composition according to claim 1, in which the polyglycerin fatty acid ester is contained at about 0.01 to 20 wt% in the emulsified composition.

11. An emulsified composition according to claim 1, in which the polyalcohol as the hydrophilic medium is glycerol, sorbitol or propylene glycol.

12. An emulsified composition according to claim 1, in which the antioxidant is contained at about 0.001 to 20 wt% in the emulsified composition.

13. An emulsified composition according to claim 1, in which the mixing ratio of the emulsifier and the active ingredient is about 1:0.1 to 1:1 by weight.

14. An emulsified composition according to claim 1, in which the lecithin is used as emulsifier and anedible oil is further contained.

15. A food in the form of liquid or semi-solid, in which the emulsified composition of claim 1 is added at such amount that docosahexaenoic acid and/or eicosapentaenoic acid is contained at about 0.0001 to 1 wt%.

16. A food according to claim 15, which is prepared as a carbonated drink, lactic fermenting beverage, fruit drink or milk.

17. A food according to claim 15, which is prepared as yoghurt or pudding.

## Patentansprüche

1. Stabile emulgierte Zusammensetzung, die einen Wirkbestandteil, der mindestens einer ist, ausgewählt aus der Gruppe, bestehend aus Docosahexaensäure, Eicosapentaensäure und einem Derivat davon oder aus einem natürlichen Öl, das diese enthält, einen Emulgator in einer Menge, die hinreicht, mindestens den Wirkbestandteil zu emulgieren, ein Antioxidans, ausgewählt aus L-Ascorbinsäure, Natrium-L-ascorbat, Erythorbinsäure, Tee-Extrakt, Apfel-Extrakt, Traubenkern-Extrakt, Sonnenblumenkern-Extrakt und aus einer Kombination davon, sowie ein hydrophiles Medium mit einem Wassergehalt von 30% oder weniger umfasst, worin der Emulgator ein Polyglycerinfettsäureester allein mit einem HLB-Wert von 13 oder mehr, 14 Kohlenstoffatomen oder mehr in der Fettsäure und einem Durchschnittspolymerisationsgrad des Glycerins von 8 bis 10 oder eine Kombination des Polyglycerinfettsäureesters mit einem Sucrosefettsäureester mit 12 bis 20 Kohlenstoffatomen in der Fettsäure und/oder einem Lecithin ist, wobei das Mischungsverhältnis des Emulgators und des Wirkbestandteils ca 1:0,1 bis 1:1, bezogen auf das Gewicht, beträgt, und das hydrophile Medium ein Polyalkohol oder ein wasserhaltiger Polyalkohol ist, und wobei die Zusammensetzung Öltröpfchen eines Durchschnittsdurchmessers von 0,2 µm oder weniger aufweist.

2. Emulgierte Zusammensetzung gemäß Anspruch 1, worin der Wirkbestandteil das natürliche Öl ist, das Docosahexaensäure, Eicosapentaensäure oder ein Derivat davon enthält.

3. Emulgierte Zusammensetzung gemäß Anspruch 1, worin das natürliche Öl aus Fisch, Eigelb oder Algen stammt.

4. Emulgierte Zusammensetzung gemäß Anspruch 1, worin der Wirkbestandteil, der mindestens einer ist, ausgewählt aus der Gruppe, bestehend aus Docosahexaensäure, Eicosapentaensäure und dem Derivat davon oder aus dem natürlichen Öl, das diese enthält, mit ca. 0,0001 bis 50 Gew.% in der emulgierten Zusammensetzung enthalten ist.

5. Emulgierte Zusammensetzung gemäß Anspruch 1, worin der Polyglycerinfettsäureester Decaglycerylmonostearat, Decaglycerylmonoololeat oder Decaglycerylmonopalmitat ist.

6. Emulgierte Zusammensetzung gemäß Anspruch 1, worin das Mischungsverhältnis des Polyglycerin- zum Sucrosefettsäureester ca. 1:0,05 bis 1:1, bezogen auf das Gewicht, beträgt.

7. Emulgierte Zusammensetzung gemäß Anspruch 1, worin das Mischungsverhältnis des Polyglycerylfettsäureesters zum Lecithin ca. 1:0,005 bis 1:0,5 , bezogen auf das Gewicht, beträgt.

8. Emulgierte Zusammensetzung gemäß Anspruch 1, worin das Mischungsverhältnis des Polyglycerinfettsäureesters, des Sucrosefettsäureesters und des Lecithins ca. 1:0,05:0,005 bis 1:1:0,5, bezogen auf das Gewicht, beträgt.

9. Emulgierte Zusammensetzung gemäß Anspruch 1, worin der Emulgator mit ca. 0,01 bis 20 Gew.% in der emulgierten Zusammensetzung enthalten ist.

10. Emulgierte Zusammensetzung gemäß Anspruch 1, worin der Polyglycerinfettsäureester ca. 0,01 bis 20 Gew.% in der emulgierten Zusammensetzung enthalten ist.

11. Emulgierte Zusammensetzung gemäß Anspruch 1, worin der Polyalkohol als das hydrophile Medium Glycerin, Sorbit oder Propylenglycol ist.

12. Emulgierte Zusammensetzung gemäß Anspruch 1, worin das Antioxidans mit ca. 0,001 bis 20 Gew.% in der emulgierten Zusammensetzung enthalten ist.

13. Emulgierte Zusammensetzung gemäß Anspruch 1, worin das Mischungsverhältnis des Emulgators zum Wirkbestandteil ca. 1:0,1 bis 1:1, bezogen auf das Gewicht, beträgt.

14. Emulgierte Zusammensetzung gemäß Anspruch 1, worin das Lecithin als Emulgator verwendet und ein genießbares Öl ferner enthalten sind.

15. Nahrungsmittel in flüssiger oder halb-fester Form, worin die emulgierte Zusammensetzung gemäß Anspruch 1 in einer solchen Menge zugefügt wird, dass die Docosahexaen- und/oder Eicosapentaensäure mit ca. 0,0001 bis 1 Gew.% enthalten sind.

16. Nahrungsmittel gemäß Anspruch 15, das als ein kohlensäurehaltiges Getränk, Milchgärungsgetränk, Fruchtgetränk oder Milch zubereitet wird.

17. Nahrungsmittel gemäß Anspruch 15, das als Joghurt oder Pudding zubereitet wird.

## Revendications

1. Composition émulsionnée stable qui comprend un ingrédient actif qui est au moins un élément sélectionné dans le groupe constitué de l'acide docosahexaénoique, de l'acide eicosapentaénoique et un produit dérivé de ces derniers, ou une huile naturelle contenant l'élément précédent ; un émulsifiant en une quantité suffisante pour émulsionner au moins l'ingrédient actif ; un antioxydant sélectionné parmi l'acide ascorbique-L, l'ascorbate-L de sodium, l'acide érythorbique, l'extrait de thé, l'extrait de pomme, l'extrait de grain de raisin, l'extrait de graine de tournesol et toute combinaison de ces derniers ; et un milieu hydrophile ayant une teneur en eau de 30 % ou moins ; dans lequel l'émulsifiant est un ester d'acide gras de polyglycérine ayant un HLB de 13 ou plus, 14 atomes de carbone ou plus dans l'acide gras et un degré moyen de polymérisation de glycérine de 8 à 10 seule ou en combinaison de l'ester d'acide gras de polyglycérine et de l'ester d'acide gras de saccharose ayant 12 à 20 atomes de carbone dans l'acide gras et/ou une lécithine, le rapport de mélange de l'émulsifiant et de l'ingrédient actif est d'environ 1/0,1 à 1/1 en poids, et le milieu hydrophile est un polyalcool ou un polyalcool contenant de l'eau, la composition comprenant des gouttelettes d'huile ayant un diamètre moyen de 0,2 *µ* m ou moins.

2. Composition émulsionnée selon la revendication 1, dans laquelle l'ingrédient actif est de l'huile naturelle contenant de l'acide docosahexaénoique, de l'acide eicosapentaénoique et un produit dérivé de ces derniers.

3. Composition émulsionnée selon la revendication 1, dans laquelle l'huile naturelle est obtenue à partir du poisson, du jaune d'oeuf ou des algues.

4. Composition émulsionnée selon la revendication 1, dans laquelle l'ingrédient actif qui est au moins un élément sélectionné dans le groupe constitué de l'acide docosahexaénoique, de l'acide eicosapentaénoique et les produits dérivés de ces derniers, ou l'huile naturelle contenant l'élément précédent contenu en une quantité d'environ 0,0001 à 50 % en poids dans la composition émulsionnée.

5. Composition émulsionnée selon la revendication 1, dans laquelle l'ester d'acide gras de polyglycérine est du monostéarate de décaglycéryl, du mono-oléate de décaglycéryl ou du monopalmitate de décaglycéryl.

6. Composition émulsionnée selon la revendication 1, dans laquelle le rapport de mélange de l'ester d'acide gras de polyglycérine et de l'ester d'acide gras de saccharose est d'environ 1/0,05 à 1/1 en poids.

7. Composition émulsionnée selon la revendication 1, dans laquelle le rapport de mélange de l'ester d'acide gras de polyglycérine et de la lécithine est d'environ 1/0,005 à 1/0,5 en poids.

8. Composition émulsionnée selon la revendication 1, dans laquelle le rapport de mélange de l'ester d'acide gras de polyglycérine, de l'ester d'acide gras de saccharose et de la lécithine est d'environ 1/0,05/0,005 à 1/1/0,5 en poids.

9. Composition émulsionnée selon la revendication 1, dans laquelle l'émulsifiant est contenu en une quantité d'environ 0,01 à 20 % en poids dans la composition émulsionnée.

10. Composition émulsionnée selon la revendication 1, dans laquelle l'ester d'acide gras de polyglycérine est contenu en une quantité d'environ 0,01 à 20 % en poids dans la composition émulsionnée.

11. Composition émulsionnée selon la revendication 1, dans laquelle le polyalcool en tant que milieu hydrophile est du glycérol, du sorbitol ou du propylène glycol.

12. Composition émulsionnée selon la revendication 1, dans laquelle l'antioxydant est contenu en une quantité d'environ 0,001 à 20 % en poids dans la composition émulsionnée.

13. Composition émulsionnée selon la revendication 1, dans laquelle le rapport de mélange de l'émulsifiant et de l'ingrédient actif est d'environ 1/0,1 à 1,1 en poids.

14. Composition émulsionnée selon la revendication 1, dans laquelle la lécithine est utilisée en tant qu'émulsifiant et de l'huile comestible est de plus contenue.

15. Aliment sous la forme d'un liquide ou d'un semi-solide, dans lequel la composition émulsionnée selon la revendication 1 est ajoutée en une quantité de sorte que l'acide docosahexaénoique et/ou l'acide eicosapentaénoique est contenu en une quantité d'environ 0,0001 à 1 % en poids.

16. Aliment selon la revendication 15, qui est préparé en tant que boisson gazeuse, boisson à ferment lactique, boisson aux fruits ou lait.

17. Aliment selon la revendication 15, qui est préparé en tant que yaourt ou pudding.
